# EUROPEAN PATENT APPLICATION

(11) **EP 2 899 819 A2**
(43) Date of publication of application: **29.07.2015**
(21) Application number: 15152706.6
(22) Date of filing: 27.01.2015
(51) Int. Cl.: H02G 3/22, H02G 3/04

(54) **A seal system for sealing a wall penetration for a cable tray, a cable tray, a method for assembling a seal system, an assembly and a method for arranging a cable**

(30) Priority: 27.01.2014 NL 2012151
(71) Applicant: Gerco Brandpreventie B.V., 2871 NJ Schoonhoven (NL)
(72) Inventor: van Goudzwaard, Danny, 2871 NJ Schoonhoven (NL)
(74) Representative: Jansen, Cornelis Marinus

(57) **Abstract**

The invention relates to a seal system for sealing a wall penetration for a cable tray. The seal system comprises a tray inlay and a replaceable cover arranged to be replaceably installed at least partly over the tray inlay. The tray inlay is arranged to be fittingly installed at least partly in a cable tray in such a way that above a top surface of a compressible seal portion of said inlay a space is left open in the cable tray in order to allow placement of a cable through the cable tray and over said seal portion. The replaceable cover is arranged to be installed at least partly over the tray inlay in such a way that a bottom surface of a compressible seal portion of said cover is cooperating with the top surface of the seal portion of the inlay in order to sealingly enclose at least a part of the cable between said seal portions.

## Description

The invention relates to a seal system for sealing a wall penetration for a cable tray.

Among all sorts of fire protection for structures such as buildings, offshore facilities or vessels, there is compartmentalisation by means of fire separation elements such as partition walls. Such walls are substantially fire resistant or fire retardant. However, the structure is often equipped with cabling that should extend from one side of a wall to another side of the wall. Therefore, normally penetrations are made in walls in order to allow cable trays to pass.

In view of fire retardancy, such wall penetrations form weak spots. The penetrations form passages that may not only let through potentially toxic smoke, but can also enable that flames spread from one side of the wall to the other side.

In a known method for improving the fire retardancy of a wall having an opening for letting a cable tray through, firestop mortar and/or fire retardant sealant, cement or glue is used to fill up any opening remaining after installing the cable tray and the corresponding cables extending through said tray. A disadvantage of this method is that after the mortar, sealant, cement or glue has set, no additional or replacement cables can be installed through the former opening. Hence, installing new cables requires making a new hole through the wall. This method is cumbersome, time consuming and error-prone, for instance because present cabling can be damaged easily when a new hole is made. Besides, a further disadvantage of the method is that, for instance in case of constructing a new building, a wall penetration will normally not be sealed until just before completion of the building. Consequently, the wall penetration may thus form a smoke and fire passage during a large part of the construction work. Long persistence of smoke and fire passages through a wall is highly unwanted and even dangerous, especially because facilities like fire escape stairs and fire extinguishers are often not yet present during construction works, whereas construction work may often even increase the risk of fire.

An object of the present disclosure is to provide an alternative method or alternative means for sealing a wall penetration for a cable tray. It is an object of the present invention to alleviate or solve at least one of the disadvantages mentioned above. An aim of the invention is to provide a seal system that not only can maintain a certain fire resistance at least partly and/or increase fire retardancy and/or smoke penetration of a wall through which a cable tray is extending, but which system also can allow installation of additional cables after said cable tray is sealed off.

Therefore, the present invention provides for a seal system for sealing a wall penetration for a cable tray, the seal system comprising a tray inlay arranged to be fittingly installed at least partly in a cable tray in such a way that above a top surface of a compressible seal portion of said inlay a space is left open in the cable tray in order to allow placement of a cable through the cable tray and over said seal portion, wherein the seal system further comprises a replaceable cover or so-called mutation cover arranged to be replaceably installed at least partly over the tray inlay in such a way that a bottom surface of a compressible seal portion of said cover is cooperating with the top surface of the seal portion of the inlay in order to sealingly enclose at least a part of the cable between said seal portions. It is noted that although the cover can be installed at least partly over the tray inlay, this does not mean that the cover needs to be connected and/or be connectable to the tray inlay. However, in embodiments the cover may nevertheless be connected and/or be connectable to the tray inlay.

By providing a seal system that can locally seal a passage in a cable tray, a cable tray extending through a wall penetration can be sealed off in order to maintain or increase the fire retardancy of a wall at least partly.

By making the seal portions of the inlay and cover compressible, a cable can be sealingly fit between said seal portions. It is thus counteracted that said cable prevents the cover to approach the inlay sufficiently. The seal portions can thus approach each other and/or a cable to such extent that their bottom and top surface abut each other in order to seal the gap between them.

By arranging the cover to be replaceable, the seal system can be opened once installed and can later on be closed again in order to reseal the passage in the cable tray. Hence, after placing the cable tray through the wall penetration, said wall penetration can be sealed at least partly by sealing the passage inside said cable tray, without precluding that cables may be installed in and/or removed from said cable tray later on.

As a consequence, the invention provides for a seal system that not only can maintain or increase the fire retardancy and/or smoke retardancy of a wall through which a cable tray is extending at least partly, but which also can allow installation of additional cables after said cable tray is sealed off. Besides, the seal system may counteract that wall penetrations are left open for a relatively long time during construction work, because said seal system can be closed after being installed even if cables are not yet being installed.

In a further aspect of the present invention, the seal portions are made of a resilient material. After removing or rearranging one or more cables, the locally impressed seal portions can substantially return to their original forms. Hence, it can be counteracted that imprints, which can unintentionally form smoke or fire channels, will remain in said seal portions.

Advantageously, at least one and preferably both seal portions are made of an intumescent material. Then, during a fire the seal portion(s) tend to swell as a result of heat exposure. Accordingly, a cable extending between the two seal portions can be enclosed even tighter during said fire, thereby improving the seal formed by the seal system.

In a further aspect of the seal system, a clamp mechanism is provided for firmly securing the replaceable cover over the tray inlay. As a result, it may for instance be counteracted that the cover is pushed away from the inlay, for example due to swelling of intumescent seal portions.

The invention also relates to a cable tray provided with at least one seal system.

Further, the invention relates to a method for assembling a seal system and a method for arranging a cable.

Advantageous embodiments according to the invention are described in the appended claims.

By way of non-limiting example only, embodiments of the present invention will now be described with reference to the accompanying figures in which:
Figure 1a shows a schematic view of a wall and a cable tray extending through a wall penetration;
Figure 1b shows a schematic view of a cable tray provided with two seal systems according to an aspect of the invention;
Figure 1c shows a schematic view of a further cable tray provided with two seal systems according to an aspect of the invention;
Figure 2 shows a schematic exploded view of a seal system such as shown in Figs. 1b and 1c and a corresponding cable tray;
Figure 3 shows a cross sectional view of an embodiments of a seal system and a cable tray in a mounted position;
Figure 4 shows a schematic exploded view of an alternative embodiment of a seal system; and
Figure 5 shows a cross sectional view of the alternative embodiment shown in Figure 4.

The embodiments disclosed herein are shown as examples only and should by no means be understood as limiting the scope of the claimed invention in any way. In this description the same or similar elements have been provided with the same or similar reference signs.

In this description a seal system has to be understood as at least including but not necessarily limited to a configuration used to seal off an opening in a fire retardant or fire resistant manner. Fire resistance or fire retardancy is to be understood as including at least but not limited to a quality or capacity of withstanding or resisting fire or flames to a certain extent for a certain period of time, for example being 30, 60, 90 or 120 minutes fire resistant tested to a fire safety standard such as NEN-EN 1366, preferably NEN-EN 1366-3, NEN-EN 1366-3: 2009 and/or EN 1366-4: 2006. Smoke retardancy is to be understood as including at least but not limited to a quality or capacity of blocking smoke to pass or penetrate to a certain extent for a certain period of time, for example being 30, 60, 90 or 120 minutes smoke tight tested to a smoke tightness safety standard, for example DIN EN 13501-2. It is noted that sealingly enclosing and/or sealingly fitting should be understood as including at least but not limited to enclosing and/or fitting in such a way that respective parts abut or fit to each other, preferably such that they do not substantially allow air or smoke to pass between them. Moreover, a cable tray is to be understood as including at least but not limited to an elongated support structure for cables, such as a cable gutter or cable rack. The cable tray may be provided with side walls and may have a trough-like shape. The cable tray may be made of sheets, for instance solid sheets or perforated sheets, or may be made by other means, such as for instance wire mesh. Further, it is noted that compressible is to be understood as including at least but not limited to an ability to decrease volume as a response to a pressure increase and/or an ability to be pushed aside at least partly as a response to a pressure increase. It is noted that resilient should be understood at least as but not limited to including a capacity or ability to spring back or return at least partly to its original form or position after being compressed, which thus may include being pushed away. Further, in this description a cable has to be understood as at least including but not necessarily limited to an insulated cable used for instance for power distribution and/or communication, such as an electric cable or wire and/or a network cable.

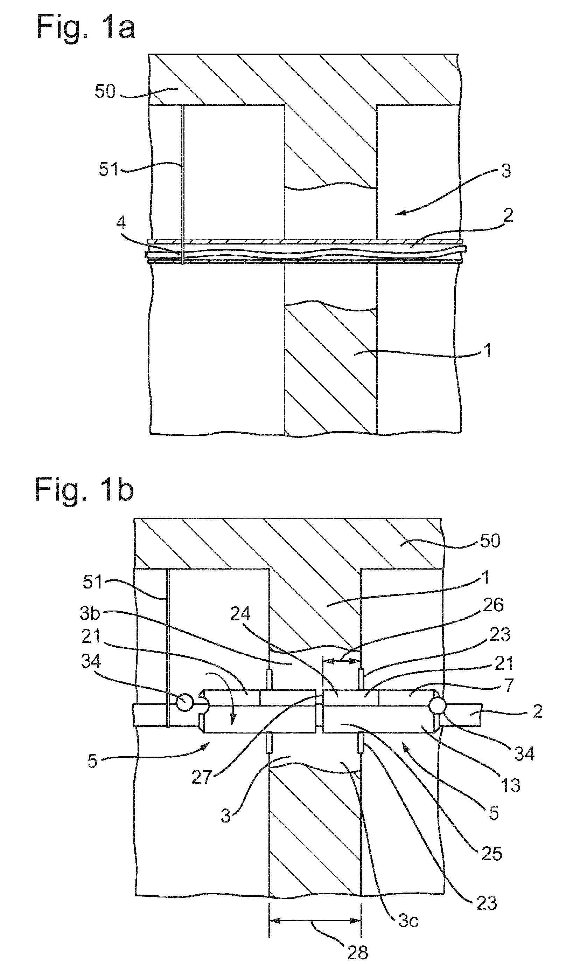

Figure 1a shows a schematic view of a wall 1 and a cable tray 2 extending through a wall penetration 3. The cable tray 2 can e.g. be suspended from a ceiling 50, especially by means of tray hangers 51, or can e.g. rest on a floor, on support bars, etc. The penetration 3 in the wall 1 is made to allow cables 4 and/or the cable tray 2 to extend from one side of a wall 1 to another side of the wall 1. The penetration 3 in the wall 1 can for instance be created by drilling, breaking, and/or sawing a hole into the wall 1. In the prior art, after installing the cable tray 2 and the cables 4, the remaining space in the wall penetration 3, including the space inside the cable tray 2, is filled up with firestop mortar and/or fire retardant sealant, cement or glue. Hence, in such case, the opening 3 formed in the wall 1 is substantially permanently filled up and the cables 4 are thus locked in place.

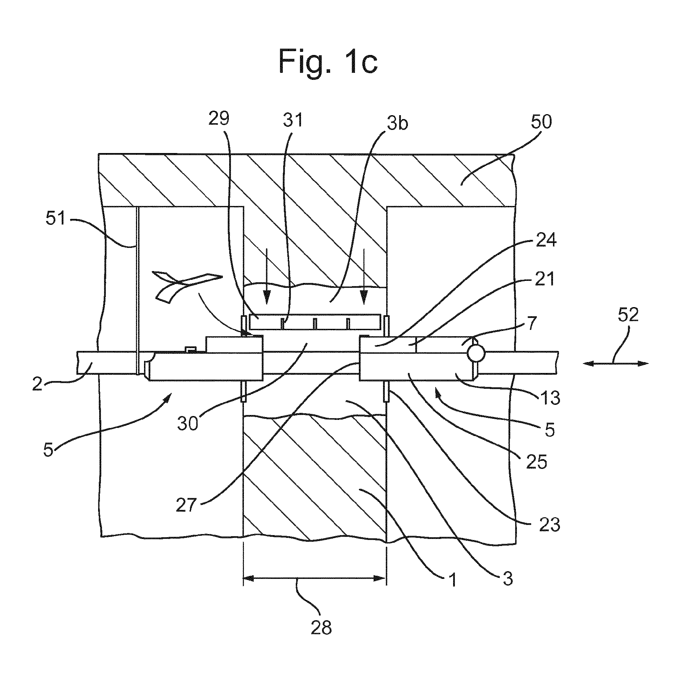

Figures 1b and 1c both show a schematic view of a cable tray 2, each provided with two seal systems 5 according to an aspect of the invention, which - among others - may counteract the above noted disadvantage.

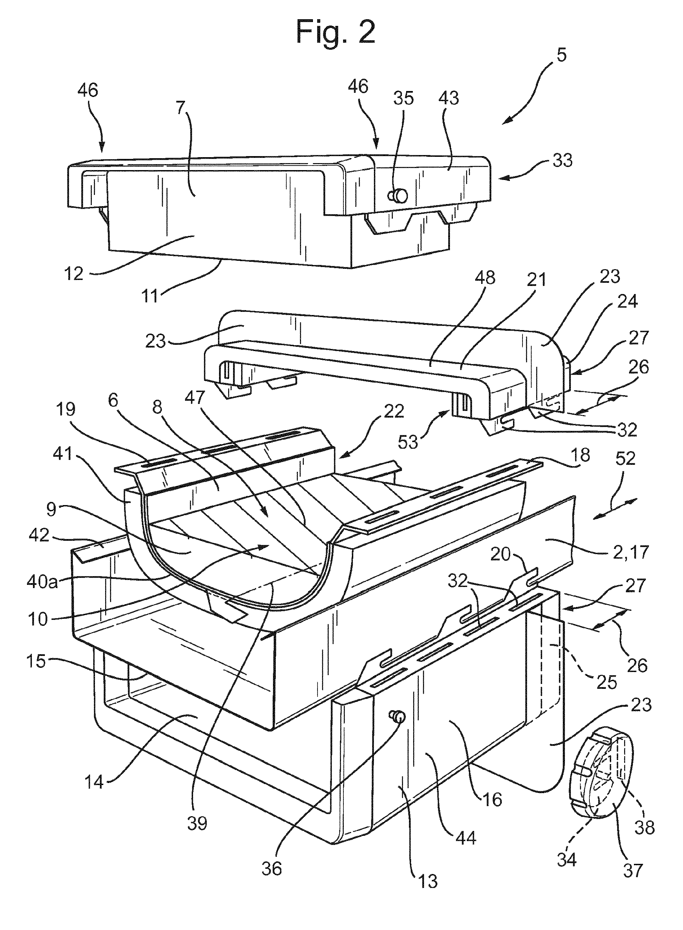

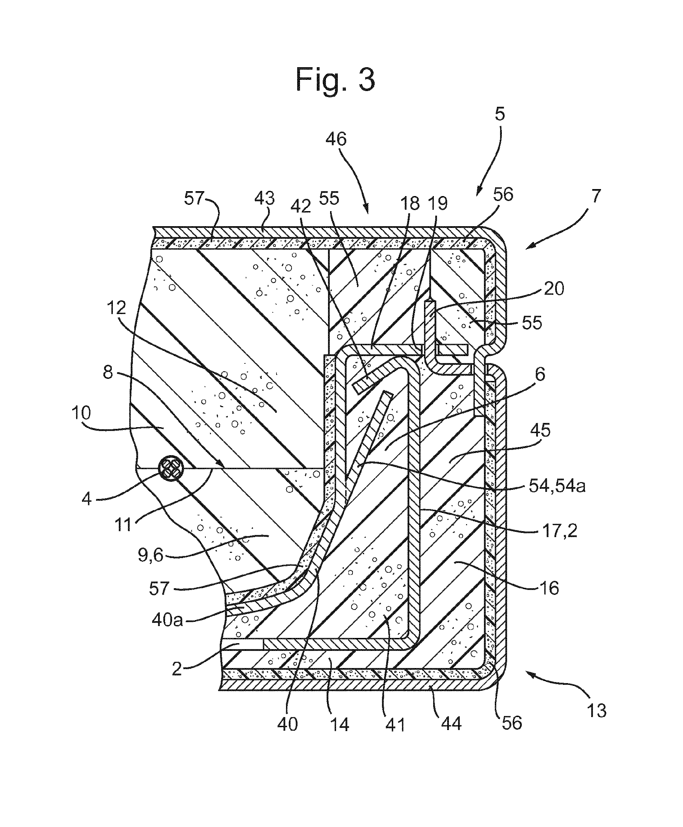

Figure 2 shows a schematic exploded view of an embodiment of a seal system 5 corresponding to the one shown in Figs. 1b and 1c and a corresponding cable tray 2. The seal system 5 is for sealing a wall penetration 3 for a cable tray 2 and comprises a tray inlay 6 and a replaceable cover 7 or so-called mutation cover 7. Figure 3 shows a cross sectional view of a seal system 5, substantially corresponding to the embodiment of Figure 2, and a cable tray 2 in a mounted or assembled position.

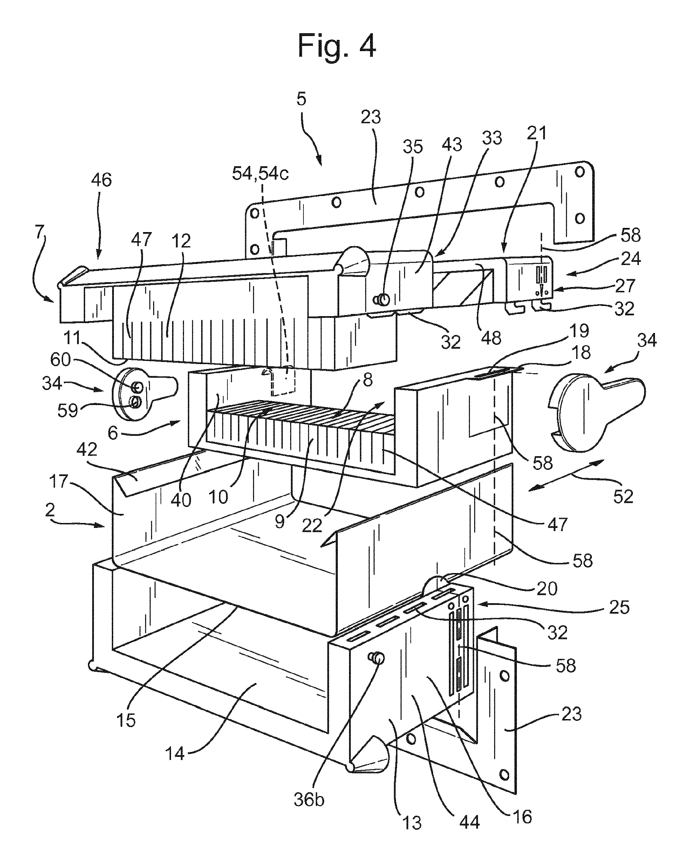

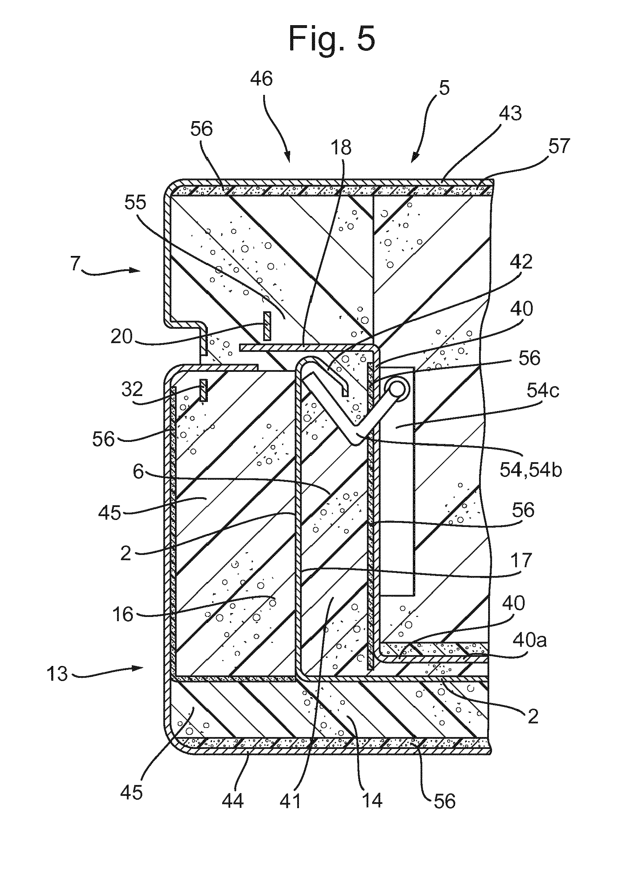

Figure 4 shows a schematic exploded view of an alternative embodiment of a seal system 5 corresponding to the one shown in Figs. 1b and 1c and also shows a corresponding cable tray 2. In Figure 5, a cross sectional view of the embodiment of Figure 4 is shown. The cross section is made at the location of dotted line 58.

In each of the shown embodiments, the tray inlay 6 is arranged to be fittingly installed at least partly in a cable tray 2 in such a way that above a top surface 8 of a compressible seal portion 9 of said inlay 6, or so-called inlay seal 9, a sealable space 10 is left open in the cable tray 2 in order to allow placement of a cable 4 through the cable tray 2 and over said seal portion 9. As can be seen best in Figs. 3 and 5, the inlay 6 may for example comprise a support structure 40, for instance for providing rigidity to said tray inlay 6. It is noted that a bottom of the support structure 40 can be provided with openings, such as holes, slots and/or slits, which openings can enable intumescent foam to expand through said openings, such that said foam can be allowed to connect with the cable tray 2 in order to close an eventual space present between said cable tray 2 and the support structure 40. Said support structure 40 can be provided with the inlay seal 9 at its inside and/or with a compressible seal layer 41 at its outside. Said seal layer 41, preferably a resilient foam layer 41, can be arranged for filling up the space between the support structure 40 and inside surfaces the cable tray 2. Advantageous, a resilient foam layer 41 is pre-installed at the outside of said support structure 40. However, in alternative embodiments, the space between the outside of the inlay 6 and the inside of the cable tray 2 can be filled up prior to or after the tray inlay 6 has been placed in said cable tray 2, for instance by means of a applying sealant, cement or glue, or a curable foam there between.

In embodiments, the support structure 40 can be provided with connection means 54, such as tray hooks 54a, for securing the tray inlay 6 to the cable tray 2, for instance by hooking behind a flange 42 present at a top of a sidewall 17 of the cable tray 2 or by hooking into an opening in a sidewall, especially an opening in a wire mesh wall. It is noted that the connection means 54 can preferably be provided at each of two lateral side walls of the inlay 6. As is shown in the embodiment of Figs. 4 and 5, the connection means 54 can advantageously comprise a pivotable hooking arm 54b, which may extend at an outer side of the support structure 40, wherein the arm 54b may be adjustable by means of lever or rotatable button or the like 54c, which may be provided at an inner side of said outer side of the support structure 40. It is noted that due to the pivotable hooking arm 54b, the resilient foam of the resilient foam layer 41 can be pushed into the space present below the flange 42 at the top of the sidewall 17 of the cable tray 2.

Additionally or alternatively, the tray inlay 6, especially its support structure 40, may comprise at least one pivot axis 39, as for instance shown in the embodiment of Fig. 2, and/or may be made of a flexible material such that the inlay 6 can be compressed to some extent, thereby facilitating installation of the inlay 6 into the cable tray 2. This may for instance be advantageously in case of tray hooks 54a that are substantially fixedly connected to the support structure 40. Alternatively, the inlay 6 may be assembled from two or more parts. Preferably, said pivot axis 39 is extending in longitudinal direction 52 of the inlay 6, for example central to a bottom portion 40a of the support structure 40 and/or inlay 6. It is noted that foam which covers the support structure 40 at the inside and/or outside can preferably be flexible and/or divided in at least two portions, such that it can follow the compression and/or folding of said support structure 40. However, in embodiments, such as for instance the embodiment shown in Figs. 4 and 5, the support structure 40 may be substantially rigid, without having two rotatably interconnected main parts.

The replaceable cover 7 is arranged to be replaceably installed at least partly over the tray inlay 6 in such a way that a bottom surface 11 of a compressible seal portion 12 of said cover 7 is facing and preferably cooperating with a top surface 8 of the seal portion 9 of the inlay 6 in order to seal against each other and/or sealingly enclose a part of one or more cables 4 between said seal portions 9, 12. In the embodiments shown here, the cover 7 can be completely detachable from the rest of the system 5 installed to the cable tray 2 in order to open the system 5. Alternatively, the removable cover 7 may be arranged such that it can remain attached to the rest of the seal system 5, e.g. mounted to the tray inlay 6 or another part of the system such as a bottom cover 13 which will be described below, when it is moved in a direction away from the inlay 6 in order to open a seal system 5 mounted to a cable tray 2. For example, the cover 7 may be pivotally connected to another part of the seal system 5, e.g. the inlay 6, the bottom cover 13 and/or a bridge part 21 such as will be described below.

When being installed, the seal portion 12 of the cover 7, i.e. the so called cover seal 12, can at least partly extend into the cable tray 2. As shown in Fig. 3, said cover seal 12 can extend into the cable tray 2 to such extent that it fills up the space 10 in said tray 2 left open by the inlay 6 at least seen in a direction perpendicular to a longitudinal axis of the cable tray 2. Since the seal portions 9, 12 are made of a compressible material, preferably a foam, said seal portions 9, 12 can transform in order to seal off cables 4 placed over the top surface 8 of the inlay seal 9. In embodiments, at least some of the compressible seal material or foam of other foam parts of the seal system can be made of an intumescent foam material, e.g. a polyurethane rubber material, such as a polyurethane rubber material that comprises sodium silicates and/or graphite. In that case, for example the seal material can expand due to exposure to heat of a fire, so that the cable 4 can be even tighter enclosed during a fire, thereby resulting in an even better seal. Advantageously, as can be seen in the embodiments shown in Figs. 2-5, a relatively thin layer of intumescent foam material 56 can be used to glue the resilient foam material 41, 45, 55 to a support structure of the respective part of the seal system 5, e.g. to the outside of the support structure 40 of the inlay 6, and/or to an inside of a support structure 43, 44 of the cover 7 and/or the bottom cover 13, which latter two support structures 43, 44 will be described below.

Advantageously, the compressible seal portions 9, 12 may be glued to the inner sides of the support structure 43, 44 of the cover 7 and/or the bottom cover 13 by means of an intumescent foam material 57. This can be advantageously, because the intumescent foam material 57 does not need to be resilient and/or because normally a relatively little intumescent foam material 57 is needed to close off the cable box substantially smoke tightly.

It is noted that the intumescent foam material 56, 57 may for example be a polyurethane rubber material, which can contain sodium silicates and/or graphite, or any suitable material and/or that during assembly of the respective system part said intumescent foam material 56, 57 may be applied in a hot and/or substantially liquid state, and that by setting of said material 56, 57, the resilient foam material 41, 45, 55 may become adhered at least partly.

In embodiments, the replaceable cover 7 can comprise a support structure 43, for instance for providing rigidity to said cover 7. Said support structure 43 may at an inside be provided with the cover seal 12. Advantageously, said structure 43 may form the outside or housing of the replaceable cover 7.

Here, the seal portions 9, 12 are made of resilient material, such that the seals 9, 12 can spring back to their original forms after removing a cable 4 previously being clamped between them.

It is noted that the seals 9, 12 or other foam parts can for instance be made of resilient closed or open cell foam or a silicone foam. Additional or alternatively, the foam may be supplied with one or more additives, such as for instance an additive to increase the fire retardancy of the foam.

In embodiments, the seal system 5 may further comprise a clamp mechanism for firmly securing the replaceable cover 7 over the tray inlay 6 and/or for securing the inlay 6 in the cable tray 2. For example, the clamp mechanism can be arranged for at least partly enclosing the cable tray 2 and/or tray inlay 6. In such case, the clamp mechanism can for example counteract that the cover is pushed off the inlay 6, such as for instance due to swelling intumescent foam material.

Here, the system 5 comprises a bottom cover 13 arranged to be fittingly installed to an outside of the cable tray 2. Said bottom cover 13 has a base plate 14 arranged to be fittingly installed against a bottom side 15 of the cable tray 2. Additionally, the bottom cover 13 may be provided with side walls 16 arranged to be fittingly installed against side walls 17 of the cable tray 2. In embodiments, the bottom cover 13 may thus be substantially tray-shaped and/or through-shaped.

In order to arrange the bottom cover 13 to be fittingly installed against an outside of the cable tray 2, the inside dimensions of said bottom cover 13 can correspond to outside dimensions of a cable tray 2, especially of a standard cable tray. Additionally or alternatively, the inside of the bottom cover 13 can be provided at least partly with a compressible material 45, such as a resilient foam 45, for enabling a sealingly fit between the bottom cover 13 and the outside of the cable tray 2. For example, a topside of the base plate 14 of the bottom cover 13 and/or inwardly facing sides of the side walls 16 of the bottom cover 13 can comprise a compressible material 45, preferably a material comprising foam and/or a rubber material, for example polyurethane foam and/or a fire retardant, smoke retardant and/or intumescent foam.

In embodiments, the bottom cover 13 can comprise a support structure 44, for instance for providing rigidity to said bottom cover 13. Said support structure 44 may at an inside be provided with the compressible material 45. Advantageously, said support structure 44 can, at least partly, form the outside of housing of the bottom cover 13.

It is noted that the support structure 44 of the bottom cover 13, the support structure 43 of the replaceable cover 7, and/or the support structure 40 of the tray inlay 6 can preferably be made of a rigid material and/or a substantially fire retardant material, for instance a metal or metal alloy such as steel. Also the flanges 23 described below and/or a support structure 48 of the bridge part 21 described below, preferably forming an outside or housing of said bridge part 21, may be made of such material. In embodiments, the outside, which may be formed by the respective support structures 43, 44, 48, of the assembled seal system 5, which may form a so-called cable box 5, can thus be made of said material. Alternatively, other materials can be used for the support structures and/or flanges, for instance plastic.

Advantageously, the seal system 5 may thus be provided with a rigid and/or a substantially fire retardant housing, which can be composed of multiple components, each component forming the support structures and/or housing 43, 44, 48 of a respective part 7, 13, 21 of the seal system 5.

Furthermore, it is noted that the seal system 5 can be arranged such that the bottom cover 13 can be mounted to the tray inlay 6 thereby sealingly enclosing a part of the cable tray 2 between them. For example, the inlay 6 can be provided with edges 18 that may overlap upper edges or flanges 42 of the cable tray 2 when the inlay 6 is installed in said cable tray 2. Said overlapping edges 18 can be arranged to facilitate connection of the inlay 6 to the bottom cover 13 and/or can be arranged to resist forces due to expanding intumescent foam at least partly. Alternatively or additionally, the bottom cover 13 and/or the inlay 6 can be provided with connectors 19, 20, especially releasable connectors. Here, the overlapping edges 18 are provided with openings 19 for receiving connection fingers 20 provided at a top portion of the side walls 16 of the bottom cover. However, in alternative embodiments other connectors or connection means can be used, such as snap fingers, screws and/or glue.

As can be seen in Fig. 3, the cover 7 may be arranged to be sealingly connected to the overlapping edges 18 of the inlay 6. For example, laterally extending side portions 46 of the cover 7 can at their underside be provided with compressible, resilient material 55 such as foam which can be a part of material of the cover seal 12. Besides, said side portions 46 can be arranged to receive the connection fingers 20 of the bottom cover 13 and/or can be provided with lips or fingers or such elements fitting into opening 19 for positioning.

As can be seen best in Fig. 2, the seal system 5 may further comprise a bridge part 21, preferably for spanning the tray inlay 6 such that a cable passage 22 is left free between the bridge part 21 and the tray inlay 6. Advantageously, said cable passage 22 is designed such that it can remain open when the replaceable cover 7 is closing off the sealable space 10. Alternatively or additionally, the seal system 5 may be arranged such that the bridge part 21 can be installed against a wall 1 in a manner in which it can seal off a space at one side of the wall 1 from a space at the other side of the wall, only leaving open said cable passage 22 and the sealable space 10. Preferably, the seal system 5 is arranged such that the cover 7 can be installed such that it is sealingly connecting to the bridge part 21 and to the inlay 6, thereby at least partly filling up the sealable space 10 and closing off the last remaining opening, i.e. the said cable passage 22. Hence, when the cover 7 is placed over the tray inlay 6, the last passage of said cable tray 2 extending through the wall 1 is closed and the spaces at both sides of the wall are portioned off.

It is noted that the bridge part 21 and/or the bottom cover 13 be provided with a flange 23 for abutting a wall 1. In order to provide for a substantially smoke retardant and/or fire retardant fit between flange 23 and wall 1, the flange 23 can be adhered to the wall, for example be glued, sealed or cemented to the wall l.The flange 23 can be arranged for facilitating a sealingly fit between the wall 1 and said bridge part 21 and/or bottom cover 13, respectively. Preferably, the flange 23 can extend substantially transverse to a longitudinal direction 52 of the system 5. Advantageously, the location of the flange 23 is adjustable with respect to the bridge part 21 and/or bottom cover 13, respectively. For example, the flange 23 may be slidingly arranged and/or the system 5 may be arranged such that the flange 23 can be mounted to the bridge part 21 or bottom cover 13 at different positions. As a result, the length 26 of a proximal end portion 24, 25 of bridge part 21 and/or bottom cover 13, measured from its proximal end 27 to the flange 23, can be adjusted. Consequently, the seal system 5 may arranged to be installed with the flange 23 at the outer surface of the wall 1 and the end portions 24, 25 of the bridge part 21 and bottom cover 13 extending into the wall penetration 3, wherein the length 26 of said proximal end portions is adjustable. Hence, the system 5 can be easily adapted for different wall thicknesses 28.

As can be seen best in Fig. 1b, the system 5 may be adapted such that the proximal ends 27 of two systems 5, especially bridge parts 21 thereof, can be placed substantially against each other in a wall penetration 3, thereby substantially covering the top side of the cable tray 2 at least within said wall penetration 3, whereas the flanges 23 can still be placed at outer surfaces of the wall 1. In case the wall 1 would for instance be thinner than the wall 1 shown in Fig. 1b, the flanges 23 can for instance be moved further towards the proximal ends 27 of the systems 5, such that the bridge parts 21 can together substantially cover the top side of the cable tray 2 within the wall penetration 3. Hence, the space 3b in the wall penetration 3 above the cable tray 2 can subsequently be filled up with filler material such as mortar or the like while leaving the cable passages 22 open. Further, the space 3c below and the space besides the cable tray can also be filled up, preferably till the outside of the cable tray 2 or the outside of the bottom cover 13 if present.

In embodiments, two seal systems 5 can be integrated in order to form an integrated seal system. For example, an integrated seal system can comprise a relatively long inlay 6 provided with two bottom seals 9 and/or comprise one relatively long bottom cover. Additionally or alternatively, the integrated seal system can comprise a single bridge part, e.g. for at least extending substantially through the wall penetration. However, an integrated seal system may alternatively comprise multiple bridge parts, e.g. two bridge parts, each bridge part connected or connectable to a single tray inlay and/or single bottom cover. Alternatively, an integrated seal system can for instance comprise two tray inlays 6 and/or two bottom covers 13 and one bridge part fitting on both tray inlays and/or both bottom covers. It will be understood that many variations are possible, and that these form part of the invention as claimed.

Alternatively or additionally, the system 5, an integrated seal system or a set comprising two seal systems 5 can comprise a roof part 29 for covering an interspace 30 left open between two proximal ends 27 of two seal systems 5. Said roof part 29 can for instance be substantially shaped as an upside-down through. Alternatively or additionally, said roof part 29 can be arranged such that its length may be easily adapted, for example by providing it with preformed weakenings 31, such as snap-off lines, for snapping, tearing or breaking off a part of it. As can be seen in Fig. 1c, a first end of said roof part 29 can be mounted to the proximal end portion 24 of the bridge part 21 of a first system 5, whereas the other end of the roof part 29 can be mounted to the bridge part 21 of the other seal system 5. Alternatively, for instance in embodiments in which the seal system 5 does not comprise a bridge part 21, the roof part 29 can be mounted to another part of the seal system 5, e.g. to the cover 7, bottom cover 13 and/or tray inlay 6. Here, the roof part 29 is mounted by means of double-sided tape, but it may alternatively be mounted by any suitable means, such as snap-connections, screws, glue, etc.

In embodiments, the bridge part 21 and/or the bottom cover 13 may be provided with anchor means such as protrusion or openings for anchoring said bridge part and/or bottom cover 13 in material for partly filling up the wall penetration 3, such as said mortar. Hence, the seal system 5 can be anchored in the wall 1 when it is partly build into it.

Advantageously, the seal system 5 may be arranged such that the bottom cover 13 can be mounted to the bridge part 21 in such way that the bottom cover 13 can be secured with respect to the cable tray 2 in at least the vertical direction, i.e. a direction substantially traverse to the longitudinal direction 52 of the cable tray 2. Consequently, a seal system 5 at least partly assembled around the cable tray 2 can remain in place, for instance without having it to be build into the wall 1 partly. It is noted that the bridge part 21 and/or the bottom cover 13 can be provided with connectors 32a, preferably releasable connectors, such as snap fingers or hooks and eyelets, which can for example be similar to the elements 20 cooperating with openings 19, 32b in the tray and/or bottom cover 13.

Additionally or alternatively, the seal system 5 can be arranged such that the replaceable cover 7 can be releasably mounted with respect to the bottom cover 13, thereby clamping said replaceable cover 7 against the tray inlay 6 and/or the bottom cover 13, preferably via the foam. In embodiments, the cover 7 can be mountable directly to the bottom cover 13, for instance by means of connectors. However, the cover 7 can alternatively be connected with respect to the bottom cover 13 via another part of the seal system 5, e.g. by mounting it to the tray inlay 6, as discussed before.

In the embodiments shown in Figs. 2-5, a rear side 33 of the replaceable cover 7 or so-called mutation cover 7 is arranged to cooperate with a front side 53 of the bridge part 21 in an interlocking way. For example, said cover 7, e.g. its rear side 33, may be provided with connection means, especially connection means arranged for connecting with a front side of the bridge part 21, e.g. by hooking thereunder and/or therein. Preferably, the interlocking may be such that when the cover 7 and bridge part 21 are interlocked, the front side of the cover 7 can be pivoted downwards towards the tray inlay 6. Additionally or alternatively, the system 5 may further comprise a clamp 34 for holding together the cover 7 and the bottom cover 13, preferably by holding together a protrusion 35 of the cover 7 and a protrusion 36 of the bottom cover 13.

For example in the embodiment of Figure 2, the clamp 34 can be provided with a clamp housing 37 having an opening 38 allowing the clamp 34 to be slid over the protrusions 35, 36. Since the clamp housing 37 is movable, especially rotationally, with respect to the clamp 34, the clamp housing 37 may be moved such that it blocks the protrusions from being slid out of the clamp 34, thereby counteracting unintentional removal of the clamp 34 from the protrusions and thus counteracting that the cover 7 can come loose from the tray inlay 6.

In the embodiment of Figure 4, an alternative clamp 34 is provided. Said clamp 34 can be rotatably connected to the bottom cover 13, e.g. by means of a pivoting cavity 59 cooperating with a pivoting protrusion 36b provided at the bottom cover. Further, the clamp 34 can comprise an engaging cavity 60 for engaging the protrusions 35 of the cover 7. Preferably, said engaging cavity 60 can be formed to counteract unintended loosening of the clamp 34, for instance by forming it as a slit being eccentrically offset from a pivoting point of said clamp 34, e.g. by shaping it as a part of a helix.

In embodiments, the clamp 34 and/or clamp housing 37 can be provided with feedback means, especially markings for visual feedback, which for instance can indicate whether or not the cover 7 is correctly installed, i.e. is installed such that it is sealing of the sealable space 10. Advantageously, multiple clamps 34 may be provided, for instance two clamps, especially one clamp 34 at each lateral side of the seal system 5.

Alternatively or additionally, the seal system 5 may comprise guides or placement means for facilitating correct placement and preferably locking of the cover 7 over the tray inlay 6 at the intended closing position.

It is noted that the invention also relates to an assembly of a wall 1, a cable tray 2 and at least one seal system 5. In the assembly, the wall 1 is provided with a wall penetration 3 and the cable tray 2 is extending through said wall penetration 3. The seal system 5 comprises at least a tray inlay 6 and a replaceable cover 7, but may in embodiments also include other components 13, 21 as described above. The tray inlay 6 is fittingly installed at least partly in a cable tray 2 such that above a top surface 8 of a compressible seal portion 9 of said inlay 6 a space 10 is left open in the cable tray 2 in order to allow placement of a cable 4 through the cable tray 2 and over said seal portion 9. The replaceable cover 7 is releasably installed at least partly over the tray inlay 6 such that a bottom surface 11 of a compressible seal portion 12 of said cover 7 cooperates with the top surface 8 of the seal portion 9 of the inlay 6 in order to seal of the space 10 above the seal portion 9 left open by the tray inlay 6.

Further, the assembly may also comprise a cable 4 or multiple cables 4 extending at least partly through the cable tray 2. At least a part of the cable 4 can be sealingly enclosed between said seal portions 9, 12.

At least a part of the space 3b, 3c in the wall penetration 3 above, besides and/or below the seal system 5 can be filled up with filler material till the outside of said seal system 5 or the outside of the cable tray 2, such that when the replaceable cover 7 is in its closing position the wall penetration 3 is substantially completely sealed.

The invention also relates to a method for assembling a seal system 5. The method comprises a step of fittingly installing a tray inlay 6 at least partly into a cable tray 2. The tray inlay 6 is placed such that in said cable tray 2 a space 10 is left open above a top surface 8 of a compressible seal portion 9 of said inlay 6. This, in order to allow placement of a cable 4 through the cable tray 2 and over said seal portion 9.

Although the tray inlay 6 is preferably arranged such that its outside can sealingly fit to the inside of the cable tray 2, the method may comprise an additional step of filling up free space, if any, between the outside of the tray inlay 6 and the inside of the cable tray 2, for example by applying foam, cement, glue or sealant there between.

The method further comprises a step of replaceably installing a cover 7 at least partly over the inlay 6. This is done such that a bottom surface 11 of a compressible seal portion 12 of said cover 7 cooperates with the top surface 8 of the seal portion 9 of the inlay 6 in order to locally seal the space 10 in the cable tray 2 above the seal portion 9 of the inlay 6.

In embodiments, the method may further comprise additional steps. For instance, the method may comprise mounting a bottom cover 13. Said bottom cover 13 can provided at least partly around the cable tray 2, preferably the bottom cover 13 can be suspended from the tray inlay 6 at least partly. Additionally or alternatively, the method may comprise clamping the cover 7 over the tray inlay 6, for example by means of a clamp mechanism. Further, a bridge part 21 may be provided and can be mounted on top of the tray inlay 6 and/or the bottom cover 13. As can be seen in Figure 4, said bridge part can for instance be installed such as to keep the bottom cover 13 in place.

The invention further provides for a method for arranging a cable 4. Said method comprises a step of providing an assembled seal system 5. Said system can then thus seal a wall penetration 3 in order to enhance the fire retardancy of the wall 1. The method further comprises releasing the cover 7 of said assembled seal system 5, and removing said cover 7 from the tray inlay 6 to such extent that in the cable tray 2 a free space 10 is created above the top surface 8 of the seal portion 9 of the tray inlay 6. Once said seal system 5 is opened, a cable 4 can be installed as to extend through the cable tray 2 over the top surface 8 of the seal portion 9 of the tray inlay 6. Alternatively or additionally to installing a new cable 4, an already present cable 4 can be removed or rearranged. After removing, installing or rearranging the cable 4, the cover 7 is reinstalled, thereby sealing the previously free space 10 while partly enclosing any cables 4 extending through said seal system 5.

Further, the method may comprise providing a cable tray 2 extending through a wall penetration 3 with a first seal system 5 at a first side of the wall and if desired additionally a second seal system 5 at the opposite side of said wall.

The invention is not restricted to the embodiments described above. It will be understood that many variants are possible.

For instance, instead of - or additionally to - providing one or more cables through the seal system mounted to the cable tray, one or more conduits or tubes may be provided.

Besides, it is noted that although the tray inlay 6 described above can in embodiments be assembled of multiple parts, the tray inlay may also be of relatively simple design. For example, the tray inlay 6 may be formed without a support structure 40, for instance consisting merely of one or multiple pieces of foam. In embodiments, the tray inlay can comprise a brick-shaped foam block dimensioned to be fittingly installed in a cable tray such that above its top surface space is left free in the cable tray.

Furthermore, it is noted that the inlay seal 9 and/or the cover seal 12 can be specially arranged for facilitating the partial compression of the inlay seal 9 and/or cover seal 12. For example, one or both of said seals 9, 12 can be provided with grooves, slits or incisions 47, preferably incisions extending from the top surface 8 of the inlay seal 9 or from the bottom surface 11 of the cover seal 12 into the respective seal 9, 12. The respective top or bottom side 8, 11 can thus be at least partly segmented into substantially parallel plates or strips. It is noted that the grooves, incisions or slits can be substantially parallel grooves, incisions or slits 47, which may extend in a direction being diagonal with respect to the longitudinal direction 52 of the tray inlay 6, or at least not parallel to the longitudinal direction 52. More preferably, also mutually parallel, diagonal grooves, incisions or slits are provided in the cover seal 12, especially being provided such that their directions intersect with the mutually parallel directions of the grooves, incisions or slits 47 in the inlay seal 9. Advantageously, the grooves or slits in the top surface 8 of the inlay seal 9 are arranged such that once the cover 7 is placed over the tray inlay 6, none of said grooves, incisions or slits is extending all the way from a distal end until an opposite proximal end of the cover seal 12, thereby thus not forming a channel which can allow smoke to pass from one side of the cover seal 12 towards its other side. However, in alternative embodiments, such as for instance in the one shown in Figs. 4 and 5, said grooves, incisions or slits 47 may be directed substantially in the longitudinal direction 52.

Additionally or alternatively, especially when the seals are provided with substantially vertically extending incisions, the inlay seal 9 and cover seal 12 can have heights that are slightly over-dimensioned. This is, these heights can be chosen such that when the cover 7 is installed on top of the inlay 6, one or both of their respective seals 9, 12 are compressed at least in their height direction. As a result, the system 5 may provide for a relatively good or tight closure.

These and other embodiments will be apparent to the person skilled in the art and are considered to lie within the scope of the invention as formulated by the following claims.

## Claims

1. A seal system for sealing a wall penetration for a cable tray, comprising:
a tray inlay arranged to be fittingly installed at least partly in a cable tray in such a way that above a top surface of a compressible seal portion of said inlay a space is left open in the cable tray in order to allow placement of a cable through the cable tray and over said seal portion; and
a replaceable cover arranged to be replaceably installed at least partly over the tray inlay in such a way that a bottom surface of a compressible seal portion of said cover is cooperating with the top surface of the seal portion of the inlay in order to sealingly enclose at least a part of the cable between said seal portions.

2. A seal system according to claim 1, wherein the seal portion of the inlay and/or the seal portion of the cover is made of resilient, intumescent and/or flame or fire retardant material.

3. A seal system according to claim 1 or 2, further comprising a clamp mechanism for firmly securing the replaceable cover over the tray inlay, the clamp mechanism preferably being arranged for at least partly enclosing the cable tray and/or tray inlay.

4. A seal system according to any of the preceding claims, further comprising a bottom cover arranged to be fittingly installed to an outside of the cable tray, said bottom cover having a base plate arranged to be fittingly installed against a bottom side of the cable tray, said bottom cover preferably further having side walls arranged to be fittingly installed against side walls of the cable tray., preferably wherein a topside of the base plate of the bottom cover and/or inwardly facing sides of the side walls of the bottom cover comprise a compressible material for enabling a sealingly fit between the bottom cover and the outside of the cable tray.

5. A seal system according to claim 4, the system being arranged such that the bottom cover can be connected to the tray inlay thereby sealingly enclosing a part of the cable tray between them.

6. A seal system according to any of the preceding claims, further comprising a bridge part, preferably spanning the tray inlay such that a cable passage is left free between the bridge part and the tray inlay, preferably wherein the system is arranged such that the bottom cover can be mounted to the bridge part thereby securing the bottom cover at least in vertical direction with respect to the cable tray.

7. A seal system according to any of the preceding claims, wherein the bottom cover and/or the bridge part is provided with a flange for abutting a wall.

8. A seal system according to any of the preceding claims, the system being arranged such that the replaceable cover can be releasably mounted with respect to the bottom cover, thereby clamping said replaceable cover against the tray inlay and/or the bottom cover.

9. A seal system according to any of the preceding claims, wherein at least one cable, conduit or tube is clamped between the compressible seal portions of the tray inlay and the replaceable cover.

10. A cable tray provided with at least one seal system according to one of the preceding claims, wherein the cable tray is preferably extending through a penetration in a wall, the cable tray more preferably being provided with a first seal system at a first side of the wall and a second seal system at the opposite side of said wall.

11. An assembly of a wall, a cable tray and at least one seal system, the wall being provided with a wall penetration, the cable tray extending through said wall penetration, the seal system comprising at least a tray inlay and a replaceable cover, wherein the tray inlay is fittingly installed at least partly in a cable tray in such a way that above a top surface of a compressible seal portion of said inlay a space is left open in the cable tray in order to allow placement of a cable through the cable tray and over said seal portion, and wherein the replaceable cover is releasably installed at least partly over the tray inlay in such a way that a bottom surface of a compressible seal portion of said cover cooperates with the top surface of the seal portion of the inlay in order to seal of the space above the seal portion left open by the tray inlay.

12. An assembly according to claim 11, further comprising a cable extending at least partly through the cable tray, at least a part of the cable being sealingly enclosed between said seal portions.

13. An assembly according to claim 11 or 12, wherein at least a part of the space in the wall penetration above, besides and/or below the seal system is filled up with filler material till the outside of said seal system or the outside of the cable tray, such that when the replaceable cover is in its closing position the wall penetration is substantially completely sealed.

14. A method for assembling a seal system, comprising the steps of:
fittingly installing a tray inlay at least partly into a cable tray, thereby in said cable tray leaving open a space above a top surface of a compressible seal portion of said inlay in order to allow placement of a cable through the cable tray and over said seal portion; and
replaceably installing a cover at least partly over the inlay such that a bottom surface of a compressible seal portion of said cover cooperates with the top surface of the seal portion of the inlay in order to locally seal the space in the cable tray above the seal portion of the inlay.

15. A method for arranging a cable, comprising the steps of:
providing a seal system assembled according to claim 14;
releasing the cover;
removing the cover from the tray inlay to such extent that in the cable tray a free space is created above the top surface of the seal portion of the tray inlay;
installing, removing and/or rearranging a cable through the cable tray over the top surface of the seal portion of the tray inlay; and
reinstalling the cover, thereby sealing the previously free space.
